# EUROPEAN PATENT APPLICATION

(11) **EP 1 783 671 A1**
(43) Date of publication of application: **09.05.2007**
(21) Application number: 05109030.6
(22) Date of filing: 29.09.2005
(51) Int. Cl.: G06Q 10/00, G06F 3/033

(54) **Slider Bar Interface for Quick Limit Buying and Selling of Commodities**

(71) Applicant: Research In Motion Limited, Waterloo, Ontario N2L 3W8 (CA)
(72) Inventor: Lai, Frederick Chee-Kiong, N2V 2L1, Waterloo, (CA)
(74) Representative: Rickard, David John

(57) **Abstract**

A slider bar (38) for commodity transactions to quickly determine a price for a transaction based upon a par price for the commodity. The use of a slider bar (38) allows a trader to quickly determine a price for the transaction relative to par and transmit that transaction to a commodity market provider.

## Description

When using a personal computing device utilizing a network such as the Internet for the purpose of making trades in commodities, latencies in data delivery can have a significant impact in fast markets where prices may fluctuate widely for volatile equities.

Commodity markets typically allow a trader to specify a limit price to purchase or sell commodities. The price that is specified must be manually keyed in by the trader through the use of a personal computing device. This is not always ideal for fast markets, particularly when the current price of the commodity of interest is not immediately available. In order for a trader to verify the current price of an commodity before submitting an order to purchase or sell, the trader must request that an updated price be delivered to their personal computing device.

Thus there is a need for a system and method to allow a trader to quickly place a trade in a fast market without the need to recheck current price.

An embodiment of the present invention is preferably directed to a process for allowing a trader to select a price for a transaction, having the following steps: providing a graphical trading interface for displaying information to and accepting input from the trader; allowing the trader to select a commodity to be traded; contacting a commodity market provider to determine the current price of the commodity; displaying the current price to the trader; tracking the movement of a slider bar in the graphical trading interface by the trader relative to the current price; and confirming the transaction as selected by the trader based upon the position of the slider bar.

Another embodiment of the present invention is preferably directed to a system for allowing a trader to select a price for a transaction, consisting of: means for providing a graphical trading interface for displaying information to and accepting input from the trader; means for selecting a commodity to be traded; means for contacting a commodity market provider to determine the current price of the commodity; means for displaying the current price to the trader; means for tracking the movement of a slider bar in the graphical trading interface by the trader relative to the current price; and means for confirming the transaction as selected by the trader based upon the position of the slider bar.

Another embodiment of the present invention is further preferably directed to a computer readable medium containing instructions for allowing a trader to select a price for a transaction, the medium having instructions for: providing a graphical trading interface for displaying information to and accepting input from the trader; selecting a commodity to be traded; contacting a commodity market provider to determine the current price of the commodity; displaying the current price to the trader; tracking the movement of a slider bar in the graphical trading interface by the trader relative to the current price; and for confirming the transaction as selected by the trader based upon the position of the slider bar.

### BRIEF DESCRIPTION OF THE DRAWINGS

For a better understanding of the present invention, and to show more clearly how it may be carried into effect, reference will now be made, by way of example, to the accompanying drawings which aid in understanding an embodiment of the present invention and in which:

Figure 1 is a block diagram of a personal computing device interfacing with a commodity market provider;

Figure 2 is a an illustration of a graphical trader interface that implements an embodiment of the present invention on a personal computing device;

Figure 3 is a block diagram of the components for implementing an embodiment of the present invention on a personal computing device; and

Figure 4 is a flowchart of the steps for conducting a transaction.

### DESCRIPTION OF PREFERRED EMBODIMENTS

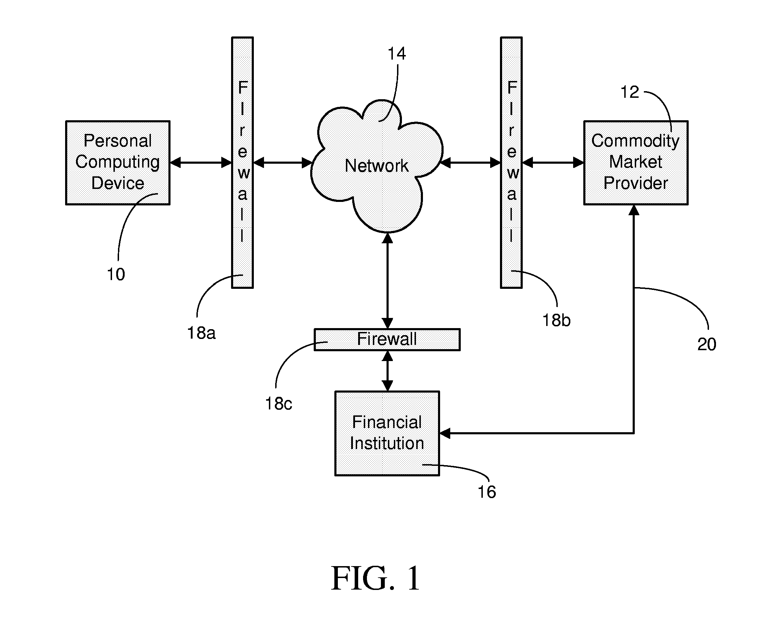

Referring first to Figure 1, a block diagram of a personal computing device interfacing with a commodity market provider is illustrated. Figure 1 illustrates four main components, personal computing device 10, commodity market provider 12, network 14 and financial institution 16. Personal computing device 10 may be any computing device, such as a Personal Digital Assistant (PDA), cell phone, laptop or desktop computer. Personal computing device 10 and commodity market provider 12 exchange information on the purchase or sale of commodities via network 14. An example of a commodity market provider would be a brokerage house providing the ability to trade equities such as stocks, futures, options and mutual funds. Other examples of commodity market providers would include those that sell blocks of airplane seats, clothing, gems or hardware. It is not the intent of the inventor to restrict embodiments utilizing the invention disclosed to specific types of commodities or commodity market providers. Accordingly, it will be understood that as used in this specification generally a commodity can be any article of commerce, whether tangible or intangible.

Requests for information on a commodity purchase or sale, from personal computing device 10 are sent to commodity market provider 12 via a connection to network 14. In one embodiment the connection to network 14 may be wireless. It is not the intent of the inventor to restrict the interface to network 14 to being wireless. For example a personal computing device 10 utilizing any medium for communication with network 14 may make use of the present invention. Network 14 may be any network capable of exchanging information between personal computing device 10 and commodity market provider 12, such as the Internet, a local area network or a wide area network. Network 14 passes information between computing device 10 and commodity market provider 12 by a communication protocol acceptable to both. A typical example of information passed between personal computing device 10 and commodity market provider 14 would include a request for a price (from personal computing device 10), a response to the price (from commodity market provider 12), an offer to purchase or sell (from personal computing device 10) and confirmation of the offer to purchase or sell (from commodity market trader 12).

When communicating through network 14, personal computing device 10 and commodity market provider 12 may make use of firewalls 18a and 18b to ensure secure communications through network 14.

Commodity market provider 12 may also make use of financial institution 16 to debit or credit the account of a trader for each transaction. Financial institution 16 may be connected to network 14 through firewall 18c or via a secure link 20 to ensure confidentiality and security of transactions.

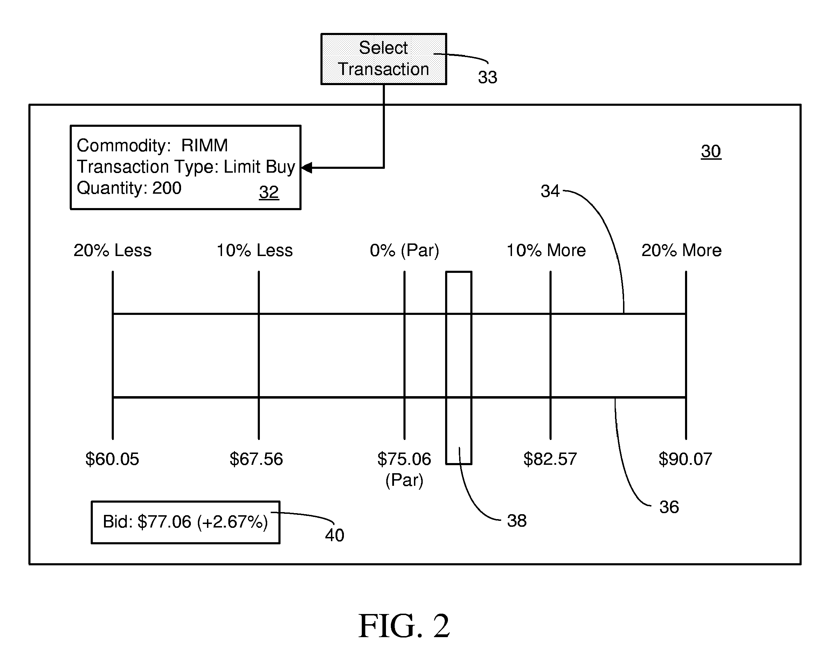

Referring now to Figure 2 an illustration of a graphical trader interface that implements an embodiment of the present invention on a personal computing device is shown as 30. Interface 30 comprises a transaction request block 32, a top information scale 34, a bottom information scale 36, a slider bar 38 and status information 40.

As shown in transaction request block 32, a trader has submitted a request to purchase a commodity (RIMM), the type of transaction being a limit buy and the quantity of the commodity being two hundred. This request would be entered through a user interface 33 where the trader would enter the commodity, the transaction type and the quantity. The commodity, transaction type and quantity would be provided by interface 33 for display in block 32. Top information scale 34 provides a par price for the commodity and percentages below and higher than the par price. Bottom information scale 36 translates the values shown on top information scale 34 into a value for the commodity. Slider bar 38 is positioned by the trader utilizing top information scale 34 and bottom information scale 36 to select a transaction price. As slider bar 38 is moved by the trader, status information 40 is updated to indicate the price selected and the percentage related to the par price.

In use, the trader would move slider bar 38 to a value for purchasing or selling the commodity. This may be accomplished through any number of interface devices such as a trackwheel, joystick, mouse, keyboard, touch screen, or another device that provides similar functionality. An example of another device could be a mechanical device operatively connected to personal computing device 10. In one embodiment such a mechanical device may include a display showing a commodity price, a dial which may be rotated to select a transaction price and buttons to press for a purchase or sale. An alternative embodiment of a mechanical device would comprise a display showing a commodity price and a series of buttons, which would be utilized to select a commodity price range for either a purchase or a sale. In this alternative embodiment of a mechanical device each button in the series of buttons would map to a price range, for example from 20% below the current price to 20% above the current price, in 5% increments. The use of a mechanical device is proposed as an option as it could provide a more rapid response from a trader than that of a conventional interface device operatively connected to personal computing device 10.

Once the trader has selected the transaction price as shown in status information 40, the trader interface device is utilized to confirm the transaction price. Confirmation of the selected transaction price may be achieved for example by a mouse click, a keystroke or the pushing of a button. In an optional second step the trader may be required to further confirm the transaction by a second mouse click, a keystroke or the pushing of a button. The elimination of the second step allows for rapid confirmation in quick markets. The inclusion of the second step allows the trader to consider the transaction before committing. A trader may toggle between the two types of confirmation through the use of a combination of keys, such as function or control keys, or through options provided via the graphical trading interface.

Interface 30 is an example of one embodiment of a trader interface for the present invention utilizing slider bar 38. It is not the intent of the inventor to restrict how the information regarding a purchase or sale of a commodity may be displayed, simply that a slider bar 38 may be utilized to determine a value for buying or selling a commodity.

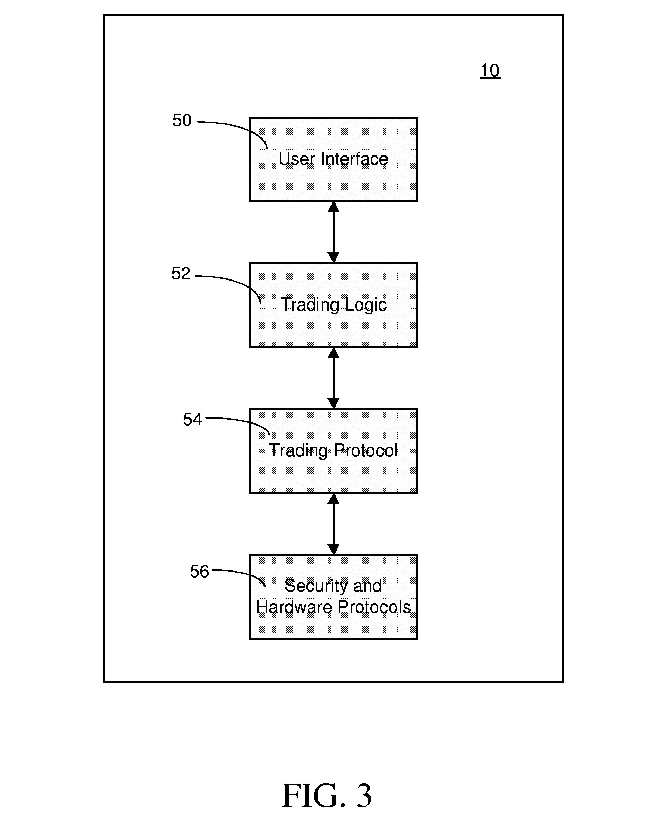

Referring now to Figure 3, a block diagram of the components for implementing an embodiment of the present invention on a personal computing device is shown. In the embodiment shown in Figure 3, components 50, 52, 54 and 56 reside on personal computing device 10. User interface component 50 displays transaction information through interface 30 to a trader. User interface component 50 monitors slider bar 38 and actions made by a trader to select a transaction price. User component interface 50 communicates with trading logic component 52 to indicate an action taken by a trader such as selecting a transaction price, and determining if to purchase or sell. In return trading logic component 52 provides updated transaction information to user interface component 50. Once a transaction has been chosen by a trader, trading logic component 52 passes the transaction information to trading protocol component 54. Trading protocol component 54 formats transactions to a form acceptable to a commodity market provider 12 and utilizes security and hardware protocol component 56 to communicate with a commodity market provider 12.

Although components 50, 52, 54 and 56 are shown as being resident on a personal computing device 10, they need not be. For example, user interface 50 may be resident in a separate device. Similarly, security and hardware protocols 56 may be resident in firewall 18a. It is not the intent for the inventors to restrict where the components shown in Figure 3 may reside.

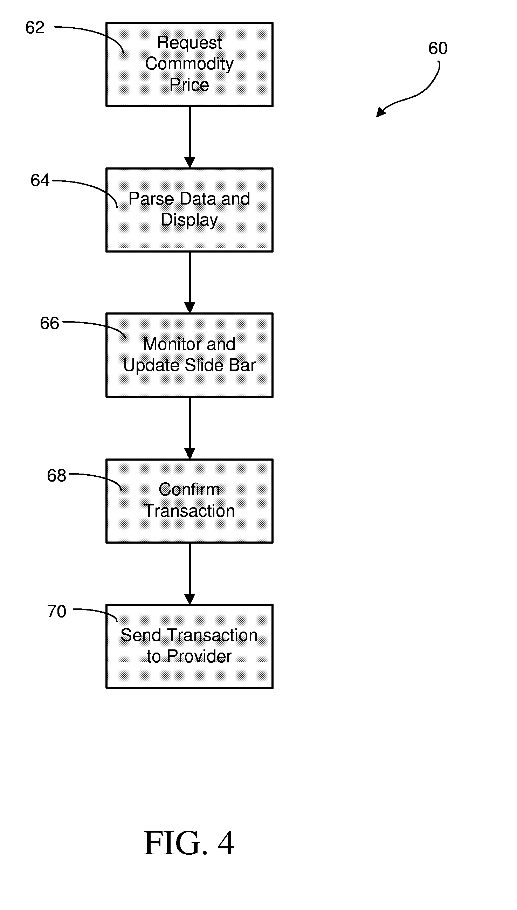

Referring now to Figure 4 a flowchart of the steps for conducting a transaction is shown generally as 60. The steps of Figure 4 are implemented by one or more of the components shown in Figure 3. Beginning at step 62 a request is made by a trader utilizing personal computing device 10 for the price of a commodity to a commodity market provider 12. Information on the commodity and the pricing is returned to the trader and at step 64 the personal computing device 10 parses the returned information and displays it to the trader in a format such as shown in Figure 2 having a slider bar 38. At step 66 the trader moves the slider bar 38 or the equivalent and the movement is detected and the position of slider bar 38 and status information 40 are updated accordingly.

At step 68, once the trader has selected the transaction price as shown in status information 40, the trader interface device is utilized to confirm the transaction price. Confirmation of the selected transaction price may be achieved for example by a mouse click, a keystroke or the pushing of a button. In an optional second step the trader may be required to further confirm the transaction by a second mouse click, a keystroke or the pushing of a button. The elimination of the second step allows for rapid confirmation in quick markets. The inclusion of the second step allows the trader to consider the transaction before committing. A trader may toggle between the two types of confirmation through the use of a combination of keys, such as function or control keys, or through options provided via the graphical trading interface.

At step 70 the transaction is forwarded to the commodity market provider 12 that provided the original pricing information and the transaction is completed. During step 70 commodity market provider 12 may also communicate with financial institution 16 to verify the transaction.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A process for allowing a trader to select a price for a transaction, the process comprising the steps of:
providing a graphical trading interface (30) for displaying information to and accepting input from said trader;
allowing said trader to select a commodity to be traded (33);
contacting a commodity market provider (12) to determine the current price of said commodity;
displaying said current price to said trader;
tracking the movement of a slider bar (38) in said graphical trading interface by said trader relative to said current price; and
confirming said transaction as selected by said trader based upon the position of said slider bar.

2. The process of claim 1 further comprising the step of creating updated status information (40) and displaying updated status information to said trader based upon the position of said slider bar.

3. The process of claim 1 or claim 2 further comprising the step of verifying said transaction with a financial institution (16).

4. A system for allowing a trader to select a price for a trading transaction, said system comprising:
means for providing a graphical trading interface (30) for displaying information to and accepting input from said trader;
means for selecting a commodity to be traded (33);
means for contacting a commodity market provider (12) to determine the current price of said commodity;
means for displaying said current price to said trader;
means for tracking the movement of a slider bar (38) by said trader relative to said current price; and
means for confirming said transaction as selected by said trader based upon the position of said slider bar.

5. The system of claim 4 further comprising means for creating updated status information (40) and for displaying updated status information to said trader based upon the position of said slider bar.

6. The system of claim 4 or claim 5 further comprising means for verifying said transaction with a financial institution (16).

7. The system of any one of claims 4 to 6 wherein said slider bar is implemented through the use of a mechanical device.

8. A computer readable medium containing instructions for allowing a trader to select a price for a transaction, the instructions being arranged to implement the process of any one of claims 1 to 3.

## Amended claims

### Amended claims in accordance with Rule 86(2) EPC.

**1.** A process utilizing a personal computing device for allowing a trader to select a price for a transaction, the process comprising the steps of:
providing a graphical trading interface (30) for displaying information to and accepting input from said trader;
allowing said trader through the use of said graphical trading interface to select a commodity to be traded (33);
contacting a commodity market provider means (12) from said personal computing device to determine the current price of said commodity;
displaying said current price to said trader on an information scale (34) displayed by said graphical trading interface;
tracking the movement of a slider bar (38) in said graphical trading interface in response to an input by said trader causing said slider bar to move relative to said displayed current price; and
confirming said price for a transaction as selected by said trader utilizing the personal computing device based upon the position of said slider bar (38) relative to said displayed current price.

**2.** The process of claim 1 further comprising the step of creating status information (40) and displaying said status information on said graphical trading interface (30) based upon the position of said slider bar (38) relative to said displayed current price.

**3.** The process of claim 2, wherein said status information comprises at least the price selected by the trader through said input causing the slider bar (38) to move relative to the displayed current price.

**4.** The process of claim 3, wherein said status information (40) further comprises a percentage indicating a difference between the price selected by the trader and the displayed current price.

**5.** The process of any one of claims 2 to 4 further comprising the step of updating the status information (40) displayed on the graphical trading interface (30) as the slider bar (38) is moved in response to an input from the trader.

**6.** The process of any preceding claim further comprising the step of verifying said transaction with a financial institution means (16).

**7.** The process of any preceding claim, wherein the step of providing a graphical trading interface (30) comprises providing means for inputting a price range for the purpose of selecting a transaction price.

**8.** The process of any preceding claim, wherein said providing of a graphical trading interface (30) further comprises displaying an information scale relative to a par price (34).

**9.** A system implemented in a personal computing device for allowing a trader to select a price for a trading transaction, said system comprising:
means for providing a graphical trading interface (30) for displaying information to and accepting input from said trader;
means for selecting through the use of said graphical trading interface a commodity to be traded (33);
means for contacting a commodity market provider means (12) from said personal computing device to determine the current price of said commodity;
means for displaying said current price to said trader on an information scale (34) displayed by said graphical trading interface;
means for tracking the movement of a slider bar (38) in said graphical trading interface in response to an input by said trader causing said slider bar to move relative to said displayed current price; and
means for confirming said price for a transaction as selected by said trader utilizing the personal computing device based upon the position of said slider bar (38) relative to said displayed current price.

**10.** The system of claim 9 further comprising means for creating status information (40) and displaying said status information on said graphical trading interface (30) based upon the position of said slider bar (38) relative to said displayed current price.

**11.** The system of claim 10, wherein said status information comprises at least the price selected by the trader through said input causing the slider bar (38) to move relative to the displayed current price.

**12.** The system of claim 11, wherein said status information (40) further comprises a percentage indicating a difference between the price selected by the trader and the displayed current price.

**13.** The system of any one of claims 10 to 12, wherein the means for creating status information (40) updates the status information (40) displayed on the graphical trading interface (30) as the slider bar (38) is moved in response to an input from the trader.

**14.** The system of any one of claims 9 to 13 further comprising means for verifying said transaction with a financial institution means (16).

**15.** The system of any one of claims 9 to 14 wherein said slider bar is implemented through the use of a mechanical device.

**16.** A computer readable medium containing instructions for allowing a trader to select a price for a transaction, the instructions being arranged to implement the process of any one of claims 1 to 8 in a personal computing device.
